(19) **Europäisches Patentamt / European Patent Office / Office européen des brevets**

(11) **EP 2 276 012 B1**

(12) # EUROPEAN PATENT SPECIFICATION

(45) Date of publication and mention
of the grant of the patent:
**06.08.2014 Bulletin 2014/32**

(51) Int Cl.:
**G08G 1/16** $^{(2006.01)}$  **H04W 52/34** $^{(2009.01)}$

(21) Application number: **10159991.8**

(22) Date of filing: **15.04.2010**

(54) **Method for transmission power control in vehicle-to-vehicle communication**

Verfahren zur Übertragungsleistungssteuerung bei der Kommunikation von Fahrzeug zu Fahrzeug

Procédé de commande de puissance de transmission dans une communication de véhicule à véhicule

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **30.06.2009 US 221567 P
07.03.2010 US 311331 P**

(43) Date of publication of application:
**19.01.2011 Bulletin 2011/03**

(73) Proprietor: **Autotalks Ltd.
40593 Kfar Netter (IL)**

(72) Inventor: **Haran, Onn
45815 Bnei Dror (IL)**

(74) Representative: **Modiano, Micaela Nadia et al
Modiano & Partners
Thierschstrasse 11
80538 München (DE)**

(56) References cited:
**EP-A1- 2 133 849      US-A1- 2006 176 847
US-A1- 2007 146 162**

Printed by Jouve, 75001 PARIS (FR)

**Description**

This application claims the benefit of U.S. provisional patent applications 61/311,331 filed March 7, 2010 and 61/221,567 filed June 30, 2009.

FIELD OF THE INVENTION

This invention generally relates to vehicle-to-vehicle communication (VVC) in a so called vehicular ad-hoc network (VANET), and more specifically to transmission power control for improving communication reliability.

BACKGROUND OF THE INVENTION

Safety applications such as "collision avoidance" built upon vehicle-to-vehicle communication (also referred to as "car-to-car" or C2C communication) rely heavily on broadcast transmissions. A loss of a broadcast packet translates directly into compromised safety. Therefore, increasing the probability of broadcast packet reception is very important. The major cause for communication failure in a vehicular network is wireless link congestion. One of the schemes for reducing link congestion includes the application of power control by limiting the reception area, thereby decreasing the number of vehicles competing over resources in a given area.

Schemes for setting of transmission power (or simply "power") based on wireless link activity are known, see e.g. "Congestion control for VANETs based on power or rate adaptation" by C. Khorakhun, H. Bische and H. Rohling, in Proceedings of the 5th International Workshop on Intelligent Transportation (WIT'08), 2008. Such schemes do not take into account the requirement of safety application for the packet reception area. For example, intersections are normally very crowded, and when VVC becomes popular, the wireless link may be expected to be very busy near intersections. The reduction of transmission power around a crowded intersection may cause an approaching vehicle to be unheard. The safety benefit will then be diminished. An optimal solution would be to transmit at higher power when entering the intersection compared with transmission powers used in the same congestion scenario on a straight road.

Another problem with existing solutions lies with the power transmission control algorithm stability. Vehicles may move fast, and the environment may be totally different by the time a power control algorithm converges. For example, on a two-way road, the vehicles on one (first) road may be affected by the temporary congestion status of the (second) opposite road, which changes constantly from the perspective of a vehicle driving on the first road. Furthermore, the safety requirements on each road may be different. One road may be congested, while the opposite road may be traffic-free. In this case, the safety behavior of both roads is coupled, and the transmission range is set at the lowest common transmission power.

Current power control schemes have as goal the minimization of network load. They do not take into account driving scenarios, e.g. whether a vehicle is on a straight road or close to an intersection. In particular, they do not take into account a safety risk, i.e. an event which can lead to an accident. For example, in one such driving scenario, the first vehicle leading a "platoon" (group of vehicles) should be heard at the greatest distance ahead possible, regardless of the number of vehicles surrounding it, to avoid a head-on accident. An analysis of exemplary driving scenarios and their effect on network load may be found in co-pending patent application PCT IB2009/051769 by Onn Haran titled "Reliable broadcast transmission in a vehicular environment".

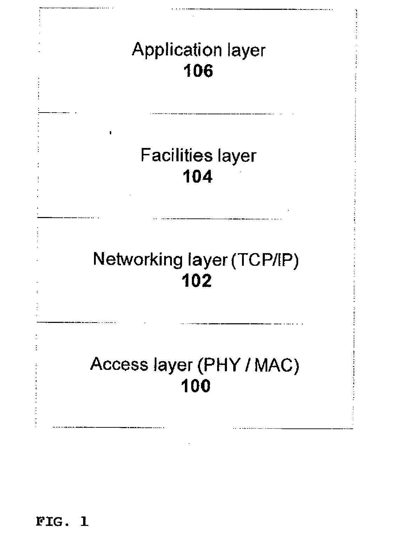

FIG. 1 shows an Open System Interconnection Reference (OSI) model protocol stack diagram of a VVC, as defined by ETSI and other VVC standards. The stack includes an access layer **100,** a networking layer **102,** a facilities layer **104** and an application layer **106.** The facilities layer provides services to the application, networking and access layers. Most existing power control algorithms are implemented in access layer **100.** The only input to such algorithms is a measurement from the PHY/MAC layers, namely the network load. Other power control algorithms, such as the one disclosed in US patent application 2010/0010742 by Mochizuki, are located at application layer **106.** GPS navigation map information is assumed to be available. Some new algorithms, such as the one described in "Analysis and Design of Effective and Low-Overhead Transmission Power Control for VANETs", by Mittag et al., proceedings of VANET'08, propose the usage of network layer **102** for implementing power control. The information measured by vehicle neighbors is used in addition to local information. The probability of a vehicle becoming involved in an accident is not checked or accounted for. There is no known power control algorithm developed for facilities layer **104.**

EP 2 133 849 A1 discloses a vehicle communication device including a plurality of application units for performing the inter-vehicle communication, a lower protocol unit for transmitting and receiving data between vehicles, and a middleware unit intervening between said application units and the lower protocol unit. The middleware unit includes a communication control service unit which controls a congestion avoiding process of its own vehicle and other vehicles based on application priority received for each of the application units, priority for each vehicle, and channel usage rate obtained from the lower protocol unit.

## SUMMARY OF THE INVENTION

The invention is defined in independent claim 1.

The invention discloses a method and an improved decentralized power control algorithm for setting (or "adjusting") transmission power in a driven vehicle. In this description, a "driven vehicle" is the vehicle in which a power control algorithm of the invention is performed and which transmits according to outcomes of this algorithm. Other vehicles transmitting information which is received in the driven vehicle are referred to as "received vehicles". Inventively, the algorithm takes into consideration (i.e. analyzes and processes) a driving safety risk in addition to network load in the decision to set the transmission power of the driven vehicle.

In this description, a "safety risk" is an event (also referable to as a "property" or "entity") with an increased probability for an accident. Such events include:

1. **Approaching intersection;** an intersection is the location with the highest probability for accidents. Any vehicle approaching an intersection has a higher safety risk. An intersection is detected by the presence of vehicles on "other roads" (for definition, see below).

2. **Curves:** curves impose greater risk as visibility is reduced and driver maneuverability is limited. A curve is detected by presence of vehicles on "other roads".

3. **Head of platoon:** a vehicle heading a line of other vehicles ("platoon") has a higher risk of a head-on accident than a vehicle in the middle of the line. This event is detected by considering vehicles ahead on the same road.

4. **Relative speed and heading:** a vehicle with different relative speed or heading than surrounding vehicles is more exposed to accidents. This is handled by a "uniqueness" calculation.

A power control algorithm of the invention analyzes a driving safety risk based on classification of vehicles in the neighborhood of the driven vehicle and estimates the required distance at which messages of the driven vehicle should be received. The location, speed and driving direction (heading) of surrounding vehicles are used to determine the required transmission power of the driven vehicle. Vehicle location and heading are defined in an X-Y, North-South coordinate system and provided by beacon transmissions, as generally known in VANETs. The algorithm is simpler than known power control algorithms which analyze all vehicles and their relative locations and which use for example trigonometric functions. The algorithm disclosed here does not use trigonometric functions at all and is therefore suitable for low-end software implementation.

The disclosed method improves the stability of an implemented decentralized power control algorithm in at least two aspects: (1) by adding a mechanism to isolate the semi-static, near environment around the driven vehicle, i.e. by considering only the vehicles that move along the driven vehicle; and (2) by adding time randomness (i.e. a functionality of random invocation time). The latter solves a problem with existing decentralized algorithms, in which all vehicles typically make the same decision, for example to increase or to decrease power. Therefore, if the power is too low, and all transmitters increase it, it may become too high and make it difficult to find a stable point. The added random invocation time reflects added time separation between vehicles operating the decentralized algorithm, to limit the number of changes and to allow some time for changes to propagate over the network.

An additional feature characterizing an algorithm of the invention is message uniqueness. When a driven vehicle is located in the middle of a platoon it does not normally have unique information, and should consequently consider mostly its close neighbors in its power setting decision. However, when the driven vehicle maneuvers, the maneuvering represented by a steering angle difference from the steering of neighboring vehicles or by a difference in speed compared with the average speed of neighboring vehicles, its transmission power should be higher.

In an embodiment, a method of the invention includes steps of: at a driven vehicle: (a) obtaining a list of all neighboring vehicles ("neighbors"); (b) classifying the neighbors to areas; (c) analyzing and processing a network load and a driving safety risk based on the number of neighbors in each area; (d) setting the transmission power of the driven vehicle; and (e) waiting for a random time period before returning to step (a) and repeating the sequence of steps (a)-(d).

In an embodiment, all received vehicles are classified to three groups: those driving on the same road in the same heading as the driven vehicle (referred to as "same road" vehicles), those driving on opposite roads in opposite direction to the driven vehicle (referred to as "opposite road" vehicles) and those driving on any other road, not "same" or "opposite" (referred to as "other road" vehicles). In other embodiments, the classification may be to more or less than three areas. For example, other classification areas may include areas defined by range, i.e. received vehicles ahead on the same road with distance < 100m, with distance < 200m, etc. The classification may be based on a heading difference between a classified vehicle and the driven vehicle and whether the classified vehicle is ahead or behind the driven vehicle. Note that other classification schemes based on factors other than heading or detection of a received vehicle being ahead or behind the driven vehicle may be used and are to be considered as within the scope of the invention. In an embodiment, the number of vehicles in each area is counted, and the number of vehicles of one area is subtracted from that in the other in step (c). The behavior of vehicles in the three exemplary classification groups is analyzed next:

**Same road:** any driven vehicle heading a platoon or driving alone should preferably transmit at maximal power, since its transmission should reach vehicles of other roads and opposite roads, for preventing head-on collisions. If the driven vehicle follows other vehicles on the same road, then its messages are important mostly for vehicles closely following it. If no other vehicle follows it (representing the case of the driven vehicle being the last in a group), then the importance of its safety message is relatively limited, and its transmission power may be minimal.

**Opposite road:** a vehicle driving on one road cannot influence the power decision of vehicles driving on the opposite road. First, it will move too fast with respect to a driven vehicle traveling on the opposite road, preventing the power control algorithm from converging. Second, this vehicle should be heard to avoid a head-on collision with the driven vehicle, regardless of the traffic and transmission density of the opposite road. Therefore, in some embodiments, all vehicles on opposite roads are ignored when setting the transmission power of the driven vehicle, but are not ignored in the context of identifying potential safety risks.

**Other roads:** Vehicles on all other roads are classified as all vehicles on roads different from the "same" and "opposite" roads. The "different road" definition is based on road heading, which is taken to be above some threshold, for example 20 degrees relative to the "same" road. When no transmissions from vehicles on other roads are received by the driven vehicle, no change in driven vehicle power is required. However, when other road vehicle transmissions are received, then the driven vehicle power should be increased, as the reception indicates an intersection or a curve. Also, cases in which vehicles are parked in a parking lot or are waiting in line before a traffic light should not confuse the algorithm and cause unnecessary power increments. For that reason, a minimal speed condition (not necessarily identical) is applied to both the driven vehicle and target vehicles (vehicles considered by the driven vehicle). Information from maps may be used to affirm the algorithm decision. For example, if a map does not include any indication of an approaching intersection or of a curved road, but vehicles on "other roads" are still received, then the algorithm may weigh down the consideration of these vehicles, since their information is inconsistent with that of the map. Maps and location information may be obtained in a number of well known ways, for example using GPS, as suggested in US patent application No. 2010/0010742 by Mochizuki.

According to the invention, there is provided method for controlling the transmission power of a driven vehicle in a vehicle-to-vehicle communication environment, the driven vehicle receiving transmissions of other vehicles in the environment, the method comprising the steps of: at the driven vehicle, classifying the other vehicles to groups of vehicles and setting the transmission power based on the classification results.

In an embodiment, the step of classifying groups includes classifying the other vehicles as being on the same road as the driven vehicle, being on an opposite road to that of the driven vehicle, or being on an other road different from both the same road and the opposite road.

In an embodiment, the step of setting the transmission power includes setting the power while ignoring the vehicles on the opposite road.

In an embodiment, the step of setting the transmission power further includes setting the power based on inputs from the vehicles on the other road.

In an embodiment, the setting the power includes increasing the power when a vehicle on the other road approaches the driven vehicle.

In an embodiment, the method further comprises, prior to the step of setting the transmission power of the driven vehicle, the step of determining a driven vehicle uniqueness value and using the determined uniqueness value in the power setting.

In an embodiment, the method further comprises the step of waiting for a random time period before repeating the sequence of steps of classifying the other vehicles to groups of vehicles and setting the transmission power based on the classification.

In an embodiment, the step of classifying includes classifying the other vehicles using information received in beacons.

In an embodiment, the step of classifying includes analyzing and processing a safety risk and the step of setting the transmission power includes using the result of the analysis and processing in the power setting.

According to the invention, there is provided a method for controlling the transmission power of a driven vehicle in a vehicle-to-vehicle communication environment, comprising the steps of: at the driven vehicle: (a) obtaining a list of neighboring vehicles, (b) classifying the neighboring vehicles to a plurality of areas, (c) analyzing and processing a driving safety risk based on the classification results, and (d) setting the transmission power based on the analyzed and processed driving safety risk and on an input of network load.

In an embodiment, the method further comprises the step of waiting for a random invocation time period before returning to step (a) and repeating the sequence of steps (b)-(d).

In an embodiment, the step of classifying the neighboring vehicles to a plurality of areas includes classifying the neighboring vehicles to a same road area, to an opposite road area and to an other road area.

In an embodiment, the step of setting the transmission power includes setting the power while ignoring the vehicles classified to the opposite road area.

In an embodiment, the step of setting the transmission power further includes setting the power based on inputs from the vehicles classified to the other road area.

In an embodiment, the setting the power includes increasing the power when a vehicle classified to the other road area approaches the driven vehicle.

In an embodiment, the method further comprises the step of, prior to the step of setting the transmission power of the driven vehicle, calculating a driven vehicle uniqueness value and using the calculated uniqueness value in the power setting.

In an embodiment, the step of classifying includes classifying the neighboring vehicles using information received in beacons.

In an embodiment, the information includes, for each neighboring vehicle, speed and heading information.

According to the invention, there is provided a method for controlling the transmission power of a driven vehicle in a vehicle-to-vehicle communication environment, comprising the steps of: at the driven vehicle: (a) processing a network load; (b) processing a safety risk; and (c) using the processed network load and safety risk to set the transmission power of the driven vehicle.

In an embodiment, the method further comprises the step of waiting for a random invocation time period before repeating the steps of processing a network load, processing a safety risk and using the processed network load and safety risk to set the transmission power of the driven vehicle.

BRIEF DESCRIPTION OF THE DRAWINGS

Particular embodiments in accordance with the invention will be described, by way of example only, and with reference to the accompanying drawings in which like reference signs are used to denote like parts, and in which:

FIG. 1 shows an OSI protocol stack diagram of a VVC;
FIG. 2 illustrates an example of the transmission power of various vehicles classified to three groups;
FIG. 3 shows a flow chart of an embodiment of the method of the invention;
FIG. 4 shows a flow chart with details of the steps in the flow chart of FIG. 2.

DETAILED DESCRIPTION OF THE INVENTION

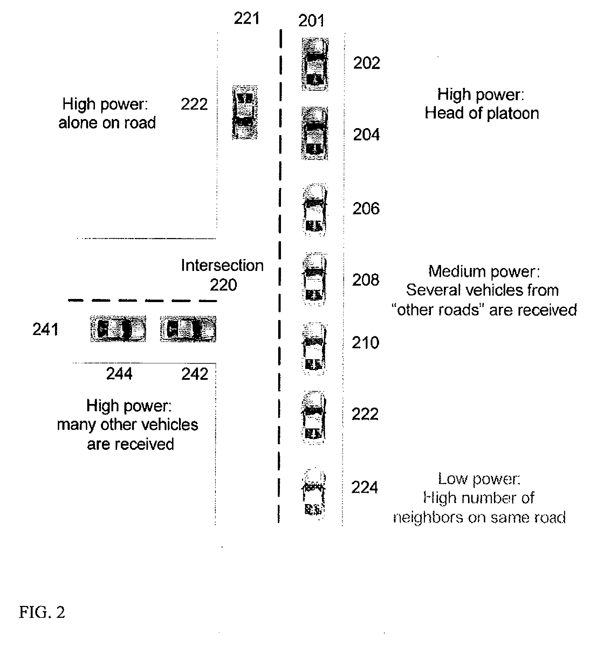

The power setting for vehicles in the three groups mentioned above is visualized schematically in FIG. 2. In an "upward road" (right lane) **201**, a first vehicle **202** transmits at maximal power because it is the head of a platoon of vehicles **202-214.** The transmission power decreases for vehicles **204, 206**, **208, 210, 212** and **214,** as these vehicles are further and further away from the leader. The transmission power of each vehicle increases once the vehicle nears an intersection **220,** and decreases once a vehicle on a crossing road **241** (e.g. a vehicle **242** or **244)** is unheard. The last vehicle in the platoon **(214)** has the lowest transmission power. On a "downward road" (left lane) **221,** a vehicle **222** transmits at maximal power, regardless of the vehicles on road **201,** because vehicle **222** is alone on road **221.** On crossing road **241,** vehicles **242** and **244** receive many transmissions from "other vehicles", i.e. all the other vehicles on roads **201** and **221,** and transmit at maximal power.

The example provided in Table 1 refers to FIG 1 and presents the algorithm result for each vehicle. Classification sub-step results are presented as well.

Table 1

| Driven vehicle | Classification: Vehicles ahead on same road | Classification: Vehicles on other roads | Result: Power |
|---|---|---|---|
| 202 | --- | --- | 0 |
| 204 | 202 | --- | -1 |
| 206 | 202, 204 | --- | -2 |
| 208 | 202, 204, 206 | --- | -3 |
| 210 | 202, 204, 206, 208 | 242, 244 | Ver I: -2 = -4+2 Ver II: 0 = -4+6 |

(continued)

| Driven vehicle | Classification: Vehicles ahead on same road | Classification: Vehicles on other roads | Result: Power |
|---|---|---|---|
| 212 | 202, 204, 206, 208, 210 | 242, 244 | Ver I: -3 = -5+2<br>Ver II: 0 = -5+6 |
| 214 | 202, 204, 206, 208, 210, 212 | 242, 244 | Ver I: -4 = -6+2<br>Ver II: 0 = -6+6 |
| 222 | --- | 242, 244 | 0 |
| 242 | -- | 210, 212, 214, 222 | 0 |
| 244 | 242 | 210, 212, 214, 222 | 0 |

In the example of Table 1, 0 is the highest (maximal) power. Any higher number is clipped to 0. The power result is relative to the maximal power. For example, "-1" represents one unit (dB) below the maximal power. Two exemplary embodiments are represented by respective versions: version I ("Ver. I") and version II ("Ver. II"). In version I, the number of vehicles on the same road is deducted from the number of vehicles on other roads. Thus, in Table 1, for driven vehicle **210,** for vehicles **202, 204, 206** and **208** ahead on the same road and for vehicles **242** and **244** on other roads, "-2" represents the two vehicles on the other roads, and "-4+2" represents the deduction of the 4 vehicles on the same road from the two vehicles on the other roads. In version II, the vehicles on other roads are given greater weighting, by exemplarily multiplying their number by a factor of 3 before deducting the number of vehicles on the same road. Thus, in Table 1, for the same vehicles as above, 0 represents the maximal power, which cannot be exceeded, and "-4+6" represents the deduction of the 4 vehicles on the same road from the two vehicles on the other roads multiplied by a factor 3. Alternatively, a different function may be used to multiply the number of vehicles of the other roads.

The power result is divided by a certain parameter, and then deducted from the maximal power. A typical parameter value may be between 2 and 5. For example, if the parameter is 2, and the power result is -2, then the transmitted power will be set to 1dB below the maximal transmission power.

The power setting is quantized based on transmitter capabilities. The result is rounded, typically up, toward the next setting. For example, if the power is set to -0.5dB from the minimal power, and each step is 2dB, then the result is rounded up and the maximal power will be used. The minimal transmission power is defined to be a certain value below the maximal transmission power, for example 12dB. The minimal power is preferably used regardless of the number of vehicles when the network is very crowded.

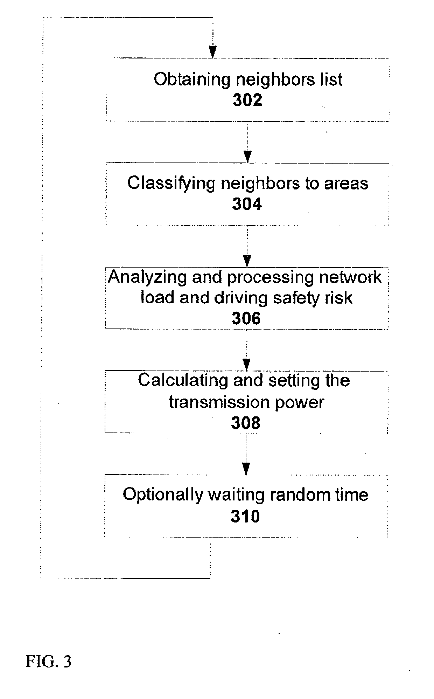

An embodiment of the method of the invention is described in detail with reference to FIG. 3. In step **302** a list of all vehicles neighboring a driven vehicle is obtained at the driven vehicle. The list includes the location and heading of each vehicle. In step **304,** the neighboring vehicles are classified to areas (by exemplarily a processor in the driven vehicle). In step **306,** the driving safety risk and the network load are analyzed and processed by the processor based on the number of neighboring vehicles in each area. In step **308,** the transmission power of the driven vehicle is calculated and set by the driven vehicle processor. In step **310,** the algorithm optionally waits for a random time period (between invocation times, see below, and determined e.g. by random generation in the processor) before returning to step **302** and repeating the sequence of steps **304-310.**

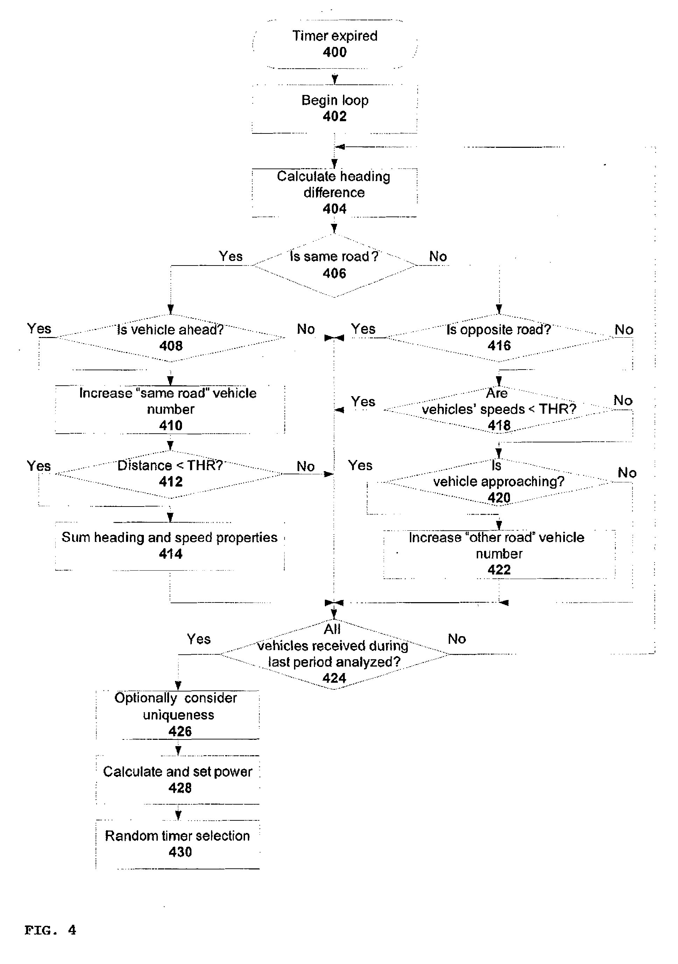

FIG. 4 provides more details related to the method described with reference to FIG. 3. The operation begins at step **400** after expiration of a timer which controls the invocation time of the algorithm. The advantage of this scheme is that it avoids duplicate processing of CAM messages, as several such messages are expected from each vehicle during the period between invocation times. Alternatively, the algorithm may be operated per received CAM message, with the results being updated upon timer expiration

A loop begins in step **402,** running over all of the vehicles received during the period between invocation times (e.g. 1 second). Optionally, an additional condition could be added to process only vehicles with a minimal number of received CAM messages, for filtering barely received far vehicles.

The heading difference between driven vehicle and each received vehicle is calculated in step **404**. As common with angle operations, the difference should consider 360° wraparound. The road classification begins from step **406.** A heading difference below a threshold, for example 45° (relative to North), indicates vehicles driving on the same road. If a received vehicle is on the same road, operation continues from step **408,** which checks if the received vehicle is ahead or behind the driven vehicle. Exemplarily, the check may be done as follows; the heading of the driven vehicle is quantized to the nearest 45°; a table such as Table 2, with three entries per quantized value, which provides the required (for comparison) signs of differential values of coordinates X and Y calculated between the driven and received vehicles is built. The differential values may be "+", "-" and "any", the latter equivalent to ("+" or "-").

| Angle | $Sign(X_{diff}) = Sign(X_{received\ vehicle} - X_{driven\ vehicle})$ | $Sign(Y_{diff}) = Sign\ (Y_{received\ vehicle} - Y_{driven\ vehicle})$ |
|---|---|---|
| 0 | Any | + |
| 45 | + | + |
| 90 | + | Any |
| 135 | + | - |
| 180 | Any | - |
| 225 | - | - |
| 270 | - | Any |
| 315 | - | + |

Table 2

After checking the heading, the correct table row is retrieved and the signs of this row are checked to see if they match the calculation [$Sign(X_{diff}) = Sign(X_{received\ vehicle} - X_{driven\ vehicle})$ and $Sign(Y_{diff}) = Sign\ (Y_{received\ vchicle} - Y_{driven\ vehicle})$]. If a match is found, then the received vehicle is considered to be on the same road, and the relevant variable (number_of_vehicles_ahead_on_road) is incremented in step 410. A sign mismatch moves the operation to step 424.

Optionally, if the received vehicle is ahead of the driven vehicle, an additional check is run in step 412 to determine if the relative distance is less than a threshold, for example 30 meters, for the sake of considering vehicles for uniqueness testing (done in step 426). If the received vehicle's relative distance is less than the threshold ("near" vehicle), then its heading and speed are summed together with the headings and speeds of all other such vehicles in step 414. Otherwise, the vehicle is "far" and its parameters are not summed. Completing this phase, both near and far vehicles received in a predetermined time period (e.g. 1 second) pass to the next loop element, step 424.

If the "same road" test in step 406 fails, then a check that a road is an "opposite road" is performed in step 416. The check is the same as that shown in Table 2, except that the results are inverted (i.e. any "+" is translated to "-" and vice versa). If the road is an opposite road ("Yes") then operation jumps to step 424. If No, the road is considered to be an "other road", and operation continues from step 418, which compares the speed of each vehicle with a predetermined threshold. This comparison is needed because in some cases, the counting of "other road" vehicles can be filtered out, to avoid considering vehicles which do not impose a potential safety risk, thereby causing unnecessary increment in transmission power. Examples of such vehicles may be those in parking lots or vehicles standing in line at a traffic light. In order to be counted, the speed of both driven and received vehicles should preferably be above a threshold, for example 30km/h. The threshold may be different for the received and the driven vehicles (e.g. lower for the driven vehicle, say 10km/h). Alternatively, the threshold may be specified for the sum of the speeds of the driven and received vehicles, for example requiring the sum to be over 50km/h. Returning to step 418, if the vehicle speed is below the threshold, then the loop continues from step 424. Otherwise, the operation continues optionally to step 420, in which a check is made to verify if the received vehicle approaches an intersection, in which case it should be counted. Optionally, received vehicles departing from an intersection may be ignored, Note that step 418 may be optional.

The check in 420 can be run similar to the one in 406, using a table like Table 2. A similar table mechanism, with values derived from heading (instead of location) difference, may then be used to determine if a received vehicle is approaching or departing. An approaching vehicle adds 1 to the number of "other road" vehicles in step 422. A departing vehicle leads to loop completion in step 424.

Once the loop ends in step 424 and all vehicles have been investigated, the process may, in an embodiment, optionally continue to uniqueness testing step 426. The basic concept of uniqueness is to increase power when the heading or speed of the driven vehicle differ from those of vehicles closely proximate to (e.g. 20m before or after) the driven vehicle and travelling on the same road in the same direction. A uniqueness value is obtained as follows:

.

$$\text{Uniqueness value} = \text{speed\_factor} * \text{abs(driven vehicle speed - average speed)} + \text{heading\_factor} * \text{abs(driven vehicle heading - average heading)}$$

As seen, the absolute speed difference is multiplied by a speed factor, and the absolute heading difference is multiplied by a heading factor, The average speed and average heading values above are obtained by dividing the speed and heading values summed in step **414** by the number of vehicles considered in the summing process. Exemplarily, the speed factor could be 2, where the speed is measured in km/h, and the heading factor could be 1, where the heading is measured in degrees. The factor units are adjusted so the power result is in dB, e.g. the speed factor unit is in dB*h/km, and the heading power unit is in dB/angle. The calculated uniqueness value is added to the required transmission power, as follows:

$$\text{Power} = \min(\text{maximal power}, \text{power} + \text{uniqueness value})$$

As before, the maximal transmission power cannot be exceeded.

In step **428,** the power result is calculated by performing the deduction explained above and programmed to (set in) a transmitter device in the driven vehicle. The calculation deducts the number of "other road" vehicles from the "same road" vehicles. A positive number is not allowed, and a positive result is set to 0. The resulting number is multiplied by a parameter and decreased from the maximal power (a unit conversion is performed implicitly).

Step **430** deals with the last aspect of achieving network stability. If all vehicles will decrease their transmission power at once, the next cycle will require power increase, and vice versa. The result would be transmission power oscillations. In order to avoid this, in one embodiment, the power adjustment is performed for only subsets of vehicles, allowing other vehicles to learn the new status and adjust accordingly. For example, a vehicle may select a random time period (e.g. between 1sec and 4 sec). The vehicle will then not change power during that time period. Afterwards, the process starts again from step **400.** Alternatively, step **430** may be skipped, in which case a fixed time for timer operation may be selected for restart from step **400.**

To summarize, the method and algorithm disclosed herein provide significant advantages over known power control methods, some of which advantages are:

1. Only vehicles ahead of a driven one need to be considered in determining congestion on the same road.
2. Moving vehicles on other roads are used in the decision to increase power.
3. Vehicles on opposite roads are ignored in the decision taken by the algorithm.
4. When driving conditions are unique, i.e, when a driven vehicle has different properties (speed and heading) than neighboring vehicles, the power is increased.
5. Randomness is added in the algorithm invocation time.

In contrast with know power control schemes applied in VVC, the invention uses the OSI facilities layer to combine access information with an analysis of a driving scenario. In such an implementation, the application layer (in which, typically, application algorithms are more complex) would not be required to be involved, while all of the information of lower layers, namely access and networking, would be available for the algorithm operation.

In addition, citation or identification of any reference in this application shall not be construed as an admission that such reference is available as prior art to the present invention.

While the invention has been described with respect to a limited number of embodiments, it will be appreciated that many variations, modifications and other applications of the invention may be made within the scope of the appended claims.

**Claims**

1. A method for controlling the communication transmission power of a driven vehicle in a vehicle-to-vehicle communication environment, the driven vehicle receiving information transmitted by vehicles in the environment, the method being **characterized by** further comprising the steps of: at the driven vehicle:

a) classifying a first group of vehicles as being on a same road ahead of the driven vehicle and a second group of vehicles as approaching the driven vehicle on other roads with a heading above a threshold relative to the same road; and

b) setting the communication transmission power of the driven vehicle based on vehicle counts of the two vehicle groups, while ignoring all other vehicles.

2. The method of claim 1, wherein identifying the first and the second group of vehicles comprises determining a heading difference between a neighboring vehicle and the driven vehicle.

3. The method of claim 1, wherein the setting the communication transmission power includes adjusting the transmission power.

4. The method of claim 3, wherein setting the transmission power further includes setting the transmission power based on inputs from the vehicles on the other roads.

5. The method of claim 4, wherein the setting the transmission power includes increasing the transmission power when a vehicle on another road approaches the driven vehicle.

6. The method of claim 1, prior to the step of setting the communication transmission power and wherein the driven vehicle is a member of a platoon of vehicles that are driving on the same road and in the same direction, the method further comprising the step of calculating, for the driven vehicle, a driven vehicle uniqueness value that is indicative of a steering angle difference or a difference in speed relative to neighboring vehicles of the platoon, and using the calculated uniqueness value in the communication transmission power setting.

7. The method of claim 1, further comprising the step of waiting for a random invocation time period before repeating the sequence of steps (a)-(b).

8. The method of claim 7, wherein the random invocation time period reflects added time separation between the vehicles performing the steps (a)-(b).

9. The method of claim 1, wherein for the driven vehicle being a member of a platoon of vehicles that are driving on the same road and in the same direction, wherein the communication transmission power of the driven vehicle is decreased with distance to the other vehicles in the platoon driving behind the driven vehicle.

10. The method of claim 6, wherein increasing the transmission power includes increasing the communication transmission power when the uniqueness value indicates that the driven vehicle maneuvers.

11. The method of claim 1, wherein the step of setting the power for communication transmission is based on an input of network load received at the driven vehicle and on an analysis of the network load.

12. The method of claim 1, wherein location and heading of the driven vehicle are defined in an X-Y, North-South coordinate system and provided by beacon transmissions.

13. The method of claim 6 or 10, wherein the uniqueness value is calculated according to the formula uniqueness value = speed_factor * abs(driven vehicle speed - average speed) + heading_factor * abs(driven vehicle heading - average heading).

**Patentansprüche**

1. Ein Verfahren zur Steuerung der Kommunikationsübertragungsleistung eines gefahrenen Fahrzeugs in einer Kommunikationsumgebung von Fahrzeug zu Fahrzeug, wobei das gefahrene Fahrzeug Informationen empfängt, die von Fahrzeugen in der Umgebung übertragen werden, und das Verfahren **dadurch gekennzeichnet ist, dass** es weiter folgende Schritte umfasst: im gefahrenen Fahrzeug:

a) Klassifizierung einer ersten Gruppe von Fahrzeugen als sich auf derselben Straße vor dem gefahrenen Fahrzeug befindend und einer zweiten Gruppe von Fahrzeugen als sich dem gefahrenen Fahrzeug auf anderen Straßen nähernd, mit einem Richtungswinkel oberhalb eines Schwellenwerts relativ zu derselben Straße; und

b) Einstellung der Kommunikationsübertragungsleistung des gefahrenen Fahrzeugs anhand der Fahrzeugzahlen der beiden Fahrzeuggruppen, bei gleichzeitigem Ignorieren aller anderen Fahrzeuge.

2. Das Verfahren gemäß Anspruch 1, wobei die Identifizierung der ersten und der zweiten Gruppe von Fahrzeugen die Bestimmung eines Richtungswinkelunterschieds zwischen einem benachbarten Fahrzeug und dem gefahrenen Fahrzeug umfasst.

3. Das Verfahren gemäß Anspruch 1, worin die Einstellung der Kommunikationsübertragungsleistung die Anpassung der Übertragungsleistung einschließt.

4. Das Verfahren gemäß Anspruch 3, worin die Einstellung der Übertragungsleistung weiter die Einstellung der Übertragungsleistung anhand von Eingaben von den Fahrzeugen auf den anderen Straßen einschließt.

5. Das Verfahren gemäß Anspruch 4, worin die Einstellung der Übertragungsleistung die Erhöhung der Übertragungsleistung, wenn ein Fahrzeug auf einer anderen Straße sich dem gefahrenen Fahrzeug nähert, einschließt.

6. Das Verfahren gemäß Anspruch 1, vor dem Schritt der Einstellung der Kommunikationsübertragungsleistung, wobei das gefahrene Fahrzeug ein Mitglied eines Zugs von Fahrzeugen ist, die auf derselben Straße und in dieselbe Richtung fahren, wobei das Verfahren weiter Folgendes umfasst: den Schritt der Berechnung, für das gefahrene Fahrzeug, eines Einzigartigkeitswerts für das gefahrene Fahrzeug, der einen Lenkwinkelunterschied oder einen Geschwindigkeitsunterschied gegenüber benachbarten Fahrzeugen des Zugs anzeigt, und Verwendung des berechneten Einzigartigkeitswerts in der Einstellung der Kommunikationsübertragungsleistung.

7. Das Verfahren gemäß Anspruch 1, das vor der Wiederholung der Folge der Schritte (a)-(b) weiter den Schritt des Wartens über einen zufällig gewählten Aufrufzeitraum umfasst.

8. Das Verfahren gemäß Anspruch 7, worin der zufällig gewählte Aufrufzeitraum die addierte Zeittrennung zwischen der Durchführung der Schritte (a)-(b) durch das Fahrzeug widerspiegelt.

9. Das Verfahren gemäß Anspruch 1, worin für das gefahrene Fahrzeug, das ein Mitglied eines Zugs von Fahrzeugen ist, die auf derselben Straße und in dieselbe Richtung fahren, worin die Kommunikationsübertragungsleistung des gefahrenen Fahrzeugs mit Abstand zu den anderen Fahrzeugen in dem Zug, die hinter dem gefahrenen Fahrzeug fahren, verringert wird.

10. Das Verfahren gemäß Anspruch 6, worin die Erhöhung der Übertragungsleistung die Erhöhung der Kommunikationsübertragungsleistung, wenn der Einzigartigkeitswert anzeigt, dass das gefahrene Fahrzeug manövriert, einschließt.

11. Das Verfahren gemäß Anspruch 1, worin der Schritt der Einstellung der Leistung für Kommunikationsübertragung auf einer Eingabe der Netzlast, die am gefahrenen Fahrzeug empfangen wird, und auf einer Analyse der Netzlast basiert.

12. Das Verfahren gemäß Anspruch 1, worin die Position und der Richtungswinkel des gefahrenen Fahrzeugs in einem X-Y, Nord-Süd-Koordinatensystem definiert sind und von Lichtsignalübertragungen bereitgestellt werden.

13. Das Verfahren gemäß Anspruch 6 oder 10, worin der Einzigartigkeitswert mit folgender Formel berechnet wird: Einzigartigkeitswert = Geschwindigkeit_Faktor * abs(Geschwindigkeit gefahrenes Fahrzeug - Durchschnittsgeschwindigkeit) + Richtungswinkel_Faktor * abs (Richtungswinkel gefahrenes Fahrzeug - durchschnittlicher Richtungswinkel).

**Revendications**

1. Un procédé pour contrôler la puissance de transmission de communication d'un véhicule conduit dans un environnement de communication de véhicule à véhicule, le véhicule conduit recevant l'information transmise par les véhicules dans l'environnement, le procédé étant **caractérisé en ce qu'**il comprend en outre les étapes de: au véhicule conduit:

a) classer un premier groupe de véhicules comme étant sur une même route devant le véhicule conduit et un second groupe de véhicules comme s'approchent du véhicule conduit sur d'autres routes avec une direction au-delà d'un seuil par rapport à la même route; et

b) régler la puissance de transmission de communication du véhicule conduit sur la base des données des deux groupes de véhicules, en ignorant tous les autres véhicules.

2. Le procédé selon la revendication 1, dans lequel l'identification du premier et du second groupe de véhicules comprend de déterminer une différence de direction entre un véhicule voisin et le véhicule conduit.

3. Le procédé selon la revendication 1, dans lequel le réglage de la puissance de transmission de communication inclut le réglage de la puissance de transmission.

4. Le procédé selon la revendication 3, dans lequel le réglage de la puissance de transmission inclut en outre de régler la puissance de transmission sur la base de données saisies d'autres véhicules sur d'autres routes.

5. Le procédé selon la revendication 4, dans lequel le réglage de la puissance de transmission inclut d'augmenter la puissance de transmission lorsqu'un véhicule sur une autre route s'approche du véhicule conduit.

6. Le procédé selon la revendication 1, avant l'étape de régler la puissance de transmission de communication et dans lequel le véhicule conduit est un membre d'un peloton de véhicules roulant sur la même route et dans la même direction, le procédé comprenant en outre l'étape de calculer, pour le véhicule conduit, une valeur d'unicité du véhicule conduit indicative d'une différence d'angle de braquage ou d'une différence de vitesse par rapport aux véhicules voisins du peloton, et d'utiliser la valeur d'unicité calculée dans le réglage de la puissance de transmission de communication.

7. Le procédé selon la revendication 1, comprenant en outre l'étape d'attendre un délai d'invocation casuel avant de répéter la séquence des étapes (a)-(b).

8. Le procédé selon la revendication 7, dans lequel le délai d'invocation casuel reflète la séparation temporelle ajoutée entre les véhicules exécutant les étapes (a)-(b).

9. Le procédé selon la revendication 1, dans lequel pour le véhicule conduit étant un membre du peloton de véhicules roulant sur la même route et dans la même direction, dans lequel la puissance de transmission de communication du véhicule conduit est diminuée par la distance jusqu'aux autres véhicules dans le peloton roulant derrière le véhicule conduit.

10. Le procédé selon la revendication 6, dans lequel l'augmentation de la puissance de transmission inclut d'augmenter la puissance de transmission de communication lorsque la valeur d'unicité indique que le véhicule conduit est en cours de manoeuvre.

11. Le procédé selon la revendication 1, dans lequel l'étape de régler la puissance pour la transmission de communication est fondée sur une saisie de données d'une charge réseau reçue au niveau du véhicule conduit et sur l'analyse de la charge réseau.

12. Le procédé selon la revendication 1, dans lequel l'emplacement et la direction du véhicule conduit sont définis au sein d'un système de coordonnées Nord-Sud, X-Y et fournis par des transmissions de balise.

13. Le procédé selon là revendication 6 ou 10, dans lequel la valeur d'unicité est calculée selon la formule valeur d'unicité = facteur_de_vitesse * abs(vitesse du véhicule conduit - vitesse moyenne) + facteur_de_direction * abs(direction du véhicule conduit - direction moyenne).

Application layer
**106**

Facilities layer
**104**

Networking layer (TCP/IP)
**102**

Access layer (PHY / MAC)
**100**

FIG. 1

221    201

High power:    222
alone on road

202

High power:
Head of platoon

204

206

Intersection
220

208

Medium power:
Several vehicles from
"other roads" are received

241

210

244    242

High power:
many other vehicles
are received

222

224

Low power:
High number of
neighbors on same road

FIG. 2

```
        ┌─────────────────────────────────┐
        │     Obtaining neighbors list     │
        │              302                 │
        └─────────────────────────────────┘
                        │
                        ▼
        ┌─────────────────────────────────┐
        │    Classifying neighbors to areas │
        │              304                 │
        └─────────────────────────────────┘
                        │
                        ▼
        ┌─────────────────────────────────┐
        │ Analyzing and processing network │
        │   load and driving safety risk   │
        │              306                 │
        └─────────────────────────────────┘
                        │
                        ▼
        ┌─────────────────────────────────┐
        │    Calculating and setting the   │
        │        transmission power        │
        │              308                 │
        └─────────────────────────────────┘
                        │
                        ▼
        ┌─────────────────────────────────┐
        │   Optionally waiting random time │
        │              310                 │
        └─────────────────────────────────┘
```

FIG. 3

Timer expired
**400**

↓

Begin loop
**402**

↓

Calculate heading
difference
**404**

↓

Yes ← Is same road? → No
**406**

Yes ← Is vehicle ahead? → No    Yes ← Is opposite road? → No
**408**    **416**

Increase "same road" vehicle
number
**410**

Yes ← Are
vehicles' speeds < THR? → No
**418**

Yes ← Distance < THR? → No    Yes ← Is
**412**    vehicle approaching? → No
**420**

Sum heading and speed properties
**414**

Increase "other road" vehicle
number
**422**

Yes ← All
vehicles received during
last period analyzed? → No
**424**

Optionally consider
uniqueness
**426**

↓

Calculate and set power
**428**

↓

Random timer selection
**430**

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61311331 A
- US 61221567 A
- WO 2009051769 W, Onn Haran
- US 20100010742 A, Mochizuki
- EP 2133849 A1

**Non-patent literature cited in the description**

- **C. KHORAKHUN ; H. BISCHE ; H. ROHLING.** Congestion control for VANETs based on power or rate adaptation. *Proceedings of the 5th International Workshop on Intelligent Transportation (WIT'08),* 2008
- **MITTAG et al.** Analysis and Design of Effective and Low-Overhead Transmission Power Control for VANETs. *proceedings of VANET'08,* 2008